# EUROPEAN PATENT APPLICATION

(11) **EP 4 245 566 A1**
(43) Date of publication of application: **20.09.2023**
(21) Application number: 23156997.1
(22) Date of filing: 16.02.2023
(51) Int. Cl.: B60C 1/00, C08L 7/00

(54) **TIRE**

(30) Priority: 16.03.2022 JP 2022041312; 25.01.2023 JP 2023009181
(71) Applicant: Sumitomo Rubber Industries, Ltd., Kobe-shi, Hyogo 651-0072 (JP)
(72) Inventor: KASAI, Yuki, Kobe-shi, 651-0072 (JP); HAMAMURA, Kenji, Kobe-shi, 651-0072 (JP)
(74) Representative: TBK

(57) **Abstract**

It is an object of the present invention to provide a tire having improved ride comfort during high-speed running. Provided is a tire comprising a tread having a base rubber layer, wherein the base rubber layer is composed of a rubber composition comprising a rubber component, wherein a product (T × S) of a thickness T (mm) of the base rubber layer and a total styrene amount S (% by mass) in the rubber component is greater than 0.50.

## Description

### TECHNICAL FIELD

The present invention relates to a tire.

### BACKGROUND OF THE INVENTION

JP 2014-189738 A describes that carbon black having a large particle size is used in a rubber composition for base tread comprising a rubber component, the carbon black, a thermosetting resin, and a curing agent, thereby improving rolling resistance (fuel efficiency) and steering stability of a tire.

### SUMMARY OF THE INVENTION

However, there is room for improvement in ride comfort during high-speed running in the tire described in JP 2014-189738 A. Moreover, nowadays, a long-distance running of a vehicle at high speed has not become rare due to improvement in vehicle performance, development of highways, and the like, and it is considered that improvement in ride comfort during high-speed running is desired.

It is an object of the present invention to provide a tire having improved ride comfort during high-speed running.

As a result of intensive studies, it was found that the above-described problem can be solved by setting a thickness T (mm) of a rubber composition constituting a base rubber layer and a total styrene amount S (% by mass) in a rubber component constituting the base rubber layer to satisfy a predetermined relationship.

That is, the present invention relates to:
a tire comprising a tread having a base rubber layer,
wherein the base rubber layer is composed of a rubber composition comprising a rubber component,
wherein, when a thickness of the base rubber layer is defined as T (mm) and a total styrene amount in the rubber component is defined as S (% by mass), a product (T × S) of T and S is greater than 0.50.

According to the present invention, a tire having improved ride comfort during high-speed running can be provided.

### BRIEF DESCRIPTION OF THE DRAWINGS

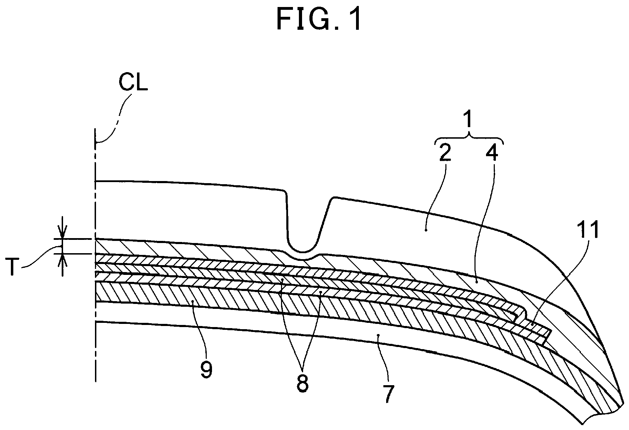

FIG. 1 is a cross-sectional view showing a part of a tread of a tire according to one embodiment of the present invention.

### DETAILED DESCRIPTION

A tire of one embodiment of the present invention is a tire comprising a tread having a base rubber layer, wherein the base rubber layer is composed of a rubber composition comprising a rubber component, wherein, when a thickness of the base rubber layer is defined as T (mm) and a total styrene amount in the rubber component is defined as S (% by mass), a product (T × S) of T and S is greater than 0.50.

A mechanism by which effects of the present invention are exhibited is considered, for example, as follows, although the following consideration is not intended to be bound by any theory.

In the tire of the present invention, (1) styrene exists in the rubber component of the base rubber layer, so that a domain in which styrene gathers is formed in the base rubber layer. (2) Since a temperature inside the rubber becomes higher than room temperature during high-speed running and a molecular mobility of a styrene domain is improved, a shock from the outside of the base rubber layer can be mitigated at the styrene domain part. (3) Moreover, a product of the thickness of the base rubber layer and the styrene amount in the rubber component is set to a value greater than 0.50, so that the shock can be easily absorbed by increasing the thickness of the base rubber layer in case of a small amount of the styrene domain, and the shock can be easily absorbed in the base rubber layer by increasing the styrene domain in case of the base rubber layer having a thin thickness. With cooperation of these (1) to (3), it is considered that a remarkable effect of an excellent ride comfort during high-speed running is achieved.

The rubber composition preferably comprises silica whose average primary particle size is 17 nm or more.

When the rubber composition comprises silica, reinforcing property can be obtained while decreasing rigidity of the rubber composition during infinitesimal deformation, so that it is considered that the effect of absorbing the shock in the base rubber layer is easily obtained. Moreover, when the average primary particle size of silica is within the above-described range, dispersibility of silica becomes good and the number of polymer molecular chains constrained by silica can be decreased, so that it becomes difficult for the shock to propagate, and it is considered that ride comfort during high-speed running is further improved.

The rubber composition preferably comprises carbon black whose average primary particle size is 40 nm or more.

When the rubber composition comprises carbon black whose average primary particle size is within the above-described range, dispersibility of carbon black becomes good and the number of polymer molecular chains constrained by carbon black can be decreased, so that it becomes difficult for the shock to propagate, and it is considered that ride comfort during high-speed running is further improved.

The rubber component preferably comprises 30% by mass or more and 90% by mass or less of an isoprene-based rubber.

The isoprene-based rubber has an incompatible relationship with a polymer comprising styrene, such as a styrene-butadiene rubber. Accordingly, when the rubber component comprises the isoprene-based rubber whose amount is within the above-described range, the isoprene-based rubber forms a phase-separated structure together with the rubber component comprising styrene, making it easy for a styrene domain to occur in a rubber phase, and it is considered that the shock can be easily absorbed.

A ratio (70°CE∗/70°C tan δ) of a complex elastic modulus (MPa) at 70°C (70°CE∗) of the rubber composition to a loss tangent at 70°C (70°C tan δ) of the rubber composition is preferably 100 or less.

The 70°C tan δ indicates a heat generation capability of the rubber. The greater the 70°C tan δ is, the more easily the styrene domain moves during high-speed running, and it is considered that shock-absorbing capability in the rubber layer can also be easily obtained. However, it is not preferable to excessively increase the 70°C tan δ from the viewpoint of rolling resistance of a tire. On the other hand, E∗ indicates rigidity of the rubber. The less a value of the E∗ is, the more easily the rubber layer deforms, and it is considered that the shock is easily absorbed. When the ratio of the E∗ to the 70°C tan δ is within the above-described range, the E∗ is decreased as the 70°C tan δ decreases, so that it is considered that a good ride comfort during high-speed running is easily obtained also in the case where the tan δ is decreased.

A ratio (S/70°C tan δ) of S to the 70°C tan δ of the rubber composition is preferably greater than 80.

The higher the heat generation capability of a rubber is, the more easily shock-absorbing capability in a rubber layer can be obtained. On the other hand, there is a concern that mobility of a styrene part inside the rubber is increased due to an influence of heat generation and a domain cannot be maintained. Accordingly, when S/70°C tan δ is within the above-described range and a sufficient styrene amount is compounded for 70°C tan δ of the rubber, heat generation capability of the rubber and shock-absorbing capability by the styrene domain are easily obtained, and thus it is considered that ride comfort during high-speed running is further improved.

A ratio (S/70°CE∗) of S to the complex elastic modulus (MPa) at 70°C (70°CE∗) of the rubber composition is preferably 1.0 or more.

When S/70°CE∗ is within the above-described range, a sufficient amount of a styrene domain can be formed for rigidity of the rubber, and thus it is considered that ride comfort during high-speed running is further improved.

T is preferably 1.3 mm or more and 3.0 mm or less.

When T is within the above-described range, stress from the outside of the base rubber layer can be mitigated, and thus it is considered that ride comfort is further improved.

S is preferably 0.4% by mass or more and 2.4% by mass or less.

When S is within the above-described range, stress from the outside of the base rubber layer can be mitigated by a domain of styrene formed in the base rubber layer, and thus it is considered that ride comfort is further improved.

### <Definition>

In a case where a tire has no circumferential grooves on a tire equatorial plane, the "thickness (T) of the base rubber layer" refers to a direct distance from the outermost part of the base rubber layer in a tire radial direction to the outermost part of a belt layer in the tire radial direction, the direct distance being measured along a normal line drawn from an intersection point of the outermost end of the tread with the tire equatorial plane. In a case where the tire has circumferential grooves on the tire equatorial plane, the "thickness (T) of the base rubber layer" refers to a direct distance from the outermost part of the base rubber layer in the tire radial direction to the outermost part of the belt layer in the tire radial direction, the direct distance being measured along a normal line drawn from a midpoint, in a tire width direction, of a land part nearest to the tire equatorial plane. The "land part nearest to the tire equatorial plane" refers to a land part having a groove edge of a circumference groove present on the tire equatorial plane, the groove edge being nearest to the tire equatorial plane.

The "total styrene amount (S) in the rubber component" is a total content (% by mass) of the styrene part compounded in 100% by mass of the rubber component and is calculated by Σ (a styrene content (% by mass) of each styrene-containing rubber × a content (% by mass) of each styrene-containing rubber in the rubber component / 100). For example, in a case where the rubber component consists of 30% by mass of a first SBR (a styrene content of 25% by mass), 60% by mass of a second SBR (a styrene content of 27.5%), and 10% by mass of a NR, a total styrene amount (S) in 100% by mass of the rubber component is 24.0% by mass (= 25×30/100 + 27.5×60/100).

### <Measuring method>

An "average primary particle size of silica" can be calculated by measuring 400 or more primary particles of silica observed in the field of view with a transmission or scanning electron microscope and averaging them.

An "average primary particle size of carbon black" can be calculated by measuring 400 or more primary particles of carbon black observed in the field of view with a transmission or scanning electron microscope and averaging them.

A "N₂SA of silica" is a value measured by a BET method according to ASTM D3037-93.

A "CTAB (cethyltrimethylammonium bromide) specific surface area of silica" is a value measured according to ASTM D3765-92.

A "N₂SA of carbon black" is a value calculated according to JIS K 6217-2 "Carbon black for rubber industry-Fundamental characteristics- Part 2: Determination of specific surface area- Nitrogen adsorption methods-Single-point procedures".

A "70°C tan δ" is a loss tangent measured using EPLEXOR Series manufactured by gabo Systemtechnik GmbH under a condition of a temperature at 70°C, a frequency of 10 Hz, an initial strain of 10%, a dynamic strain of 1%, and an extension mode. In a case where a sample for measuring a loss tangent is prepared by cutting out the sample from a tire, the sample is cut out from a tread part of the tire such that the tire radial direction becomes a thickness direction.

The "70°CE∗" is a complex elastic modulus (MPa) measured under a condition of a temperature at 70°C, a frequency of 10 Hz, and a dynamic strain amplitude of 1%. A sample for measuring a complex elastic modulus is prepared in the same manner as in the case of 70°C tan δ.

A "styrene content" is a value calculated by ¹H-NMR measurement and is applied to a rubber component having a repeat unit originating from styrene such as, for example, a SBR.

A "vinyl content (1,2-bond butadiene unit amount)" is a value calculated in accordance with JIS K 6239-2:2017 by an infrared absorption spectrum analysis and is applied to a rubber component having a repeat unit originating from butadiene such as, for example, a SBR and a BR.

A "cis content (cis-1,4-bond butadiene unit amount)" is a value calculated in accordance with JIS K 6239-2:2017 by an infrared absorption spectrum analysis and is applied to a rubber component having a repeat unit originating from butadiene such as, for example, a BR.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). The Mw is applied to, for example, a SBR, a BR, a resin component, a liquid rubber, or the like.

A procedure for producing a tire that is one embodiment of the present invention is described below in detail. However, the following descriptions are illustrative for explaining the present invention, and are not intended to limit the technical scope of the present invention to this description range only. Besides, in the present specification, a numerical range identified with "to" means to include the numerical values of both ends.

### [Tire]

Although FIG. 1 is a cross-sectional view of a part of a tread of a tire according to one embodiment of the present invention, the present invention is not limited to such an aspect.

As shown in FIG. 1, the tire of the present invention has a tread part 1 coming into contact with a ground during running and has a belt layer 8 inside in its tire radial direction. A carcass 9 and an inner liner 7 are laminated on a lower part of the belt layer 8. Moreover, a band 11 may be present between the tread part 1 and the belt layer 8. In FIG. 1, two belt layers 8 are laminated, and the band 11 having a jointless structure is disposed on an inner side of a base rubber layer 4. The tread part 1 comprises a cap rubber layer 2 constituting a tread surface and the base rubber layer 4 located on an outer side of the belt layer 8 in the tire radial direction. Moreover, one or more additional intermediate rubber layers may be present between the cap rubber layer 2 and the base rubber layer 4. In the tire according to the present invention, the base rubber layer 4 is composed of a rubber composition comprising a rubber component. Moreover, the cap rubber layer 2 is preferably composed of the rubber composition comprising the rubber component.

The thickness T (mm) of the base rubber layer of the tire according to the present invention is preferably 0.8 mm or more, more preferably 1.0 mm or more, further preferably 1.3 mm or more, particularly preferably 1.5 mm or more, from the viewpoint of the effects of the present invention. Moreover, the thickness T (mm) of the base rubber layer of the tire according to the present invention is preferably 4.0 mm or less, more preferably 3.5 mm or less, further preferably 3.0 mm or less, from the viewpoint of the effects of the present invention.

The thickness of the cap rubber layer of the tire according to the present invention is preferably 5.0 mm or more, more preferably 5.5 mm or more, further preferably 6.5 mm or more, from the viewpoint of the effects of the present invention. Moreover, the thickness of the cap rubber layer of the tire according to the present invention is preferably 10.0 mm or less, more preferably 9.0 mm or less, further preferably 8.5 mm or less, from the viewpoint of the effects of the present invention.

In the tire according to the present invention, a value (T × S) obtained by multiplying the thickness T (mm) of the base rubber layer with the total styrene amount S (% by mass) in a rubber component constituting the base rubber layer is greater than 0.50. T × S is preferably greater than 0.52, more preferably greater than 0.80, further preferably greater than 1.00, further preferably greater than 1.19, more preferably greater than 1.50, further preferably greater than 2.00, particularly preferably greater than 3.00, most preferably greater than 4.00. Besides, an upper limit value of T × S is preferably less than 15. 00, more preferably less than 10.00.

The 70°C tan δ of the rubber composition constituting the base rubber layer of the present invention is preferably 0.01 or more, more preferably 0.02 or more, further preferably 0.03 or more, from the viewpoint of damping property of the rubber composition. Moreover, the 70°C tan δ of the rubber composition constituting the base rubber layer is preferably 1.00 or less, more preferably 0.08 or less, further preferably 0.07 or less, particularly preferably 0.06 or less, most preferably 0.05 or less, from the viewpoint of the effects of the present invention. The 70°C tan δ is calculated by the above-described measuring method.

The complex elastic modulus at 70°C (70°CE∗) of the rubber composition constituting the base rubber layer of the present invention is preferably 10.0 MPa or less, further preferably 9.0 MPa or less, particularly preferably 8.5 MPa or less, most preferably 8.0 MPa or less, from the viewpoints of making rubber elasticity good, improving followability relative to other tire members, and improving ride comfort. Moreover, the 70°CE∗ of the rubber composition constituting the base rubber layer is preferably 3.5 MPa or more, more preferably 4.0 MPa or more, further preferably 5.0 MPa or more, particularly preferably 5.5 MPa or more, most preferably 6.0 MPa or more, from the viewpoint of the effects of the present invention. The 70°CE∗ is calculated by the above-described measuring method.

The ratio (70°CE∗/70°C tan δ) of 70°CE∗ to the 70°C tan δ of the rubber composition constituting the base rubber layer of the present invention is preferably 30 or more, more preferably 40 or more, further preferably 50 or more, particularly preferably 60 or more, from the viewpoint of improvement in ride comfort. Moreover, the 70°CE∗/70°C tan δ of the rubber composition constituting the base rubber layer is preferably 250 or less, more preferably 245 or less, further preferably 240 or less, further preferably 200 or less, further preferably 150 or less, further preferably 100 or less. As a result, damping property of the rubber composition is maintained, thereby improving ride comfort.

The 70°C tan δ and 70°CE∗ of the rubber composition of the present invention can be appropriately adjusted depending on types or compounding amounts of a rubber component, a filler, a silane coupling agent, a resin component, oil, and the like that are described below. For example, the 70°CE∗ can be increased by using a rubber component having a high glass transition temperature, increasing an amount of a filer, decreasing a particle size, increasing an amount of a resin component as a plasticizing agent component, decreasing the total amount of plasticizing agents, or increasing amounts of sulfur and an accelerator. Moreover, the 70°C tan δ can be increased by using a rubber component having a high glass transition temperature, increasing an amount of a filer, decreasing a particle size, increasing an amount of a resin component as a plasticizing agent component, decreasing amounts of sulfur and an accelerator, or the like.

The complex elastic modulus at 70°C (70°CE∗) of the rubber composition constituting the cap rubber layer of the present invention is preferably 10.0 MPa or less, further preferably 8.5 MPa or less, particularly preferably 7.5 MPa or less, from the viewpoint of improvement in ride comfort. Moreover, the 70°CE∗ of the rubber composition constituting the cap rubber layer is preferably 4.0 MPa or more, more preferably 5.0 MPa or more, further preferably 5.5 MPa or more, particularly preferably 6.0 MPa or more, from the viewpoint of the effects of the present invention. The 70°CE∗ is calculated by the above-described measuring method.

### [Rubber composition]

In the tire of the present invention, the total styrene amount in the rubber component constituting the base rubber layer and the thickness of the base rubber layer cooperate with each other, so that fuel efficiency and ride comfort can be effectively improved.

### <Rubber component>

The rubber composition constituting the base rubber layer of the present invention (which is hereinafter referred to as a "rubber composition of the present invention", unless otherwise noted) preferably comprises, as a rubber component, at least one selected from a group consisting of an isoprene-based rubber, a styrene-butadiene rubber (SBR), and a butadiene rubber (BR). Among them, it preferably comprises the SBR in order to form a domain of styrene in the rubber component, more preferably comprises the SBR and the isoprene-based rubber in order to improve compatibility with the SBR, form a phase-separated structure, and easily mitigate stress between rubber phases, and further preferably comprises the SBR, the isoprene-based rubber, and the BR. The rubber component may be modified or unmodified (not modified). Moreover, it may be an extended rubber previously extended with a plasticizing agent.

### (SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Additionally, hydrogenated ones of these SBR (hydrogenated SBR) and the like can be also used. These SBRs may be used alone, or two or more thereof may be used in combination.

A styrene content of the SBR can be appropriately selected such that the total styrene amount in the rubber component satisfies a range described below, and the styrene content of the SBR is preferably 50% by mass or less, more preferably 40% by mass or less, further preferably 30% by mass or less. Moreover, the styrene content of the SBR is preferably 8% by mass or more, more preferably 10% by mass or more, further preferably 15% by mass or more. Besides, the styrene content of the SBR is measured by the above-described measuring method.

A vinyl content of the SBR is preferably 10 mol% or more, more preferably greater than 15 mol% or more, further preferably 20 mol% or more, from the viewpoints of ensuring reactivity with silica, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependency, elongation at break, and abrasion resistance. Besides, the vinyl content of the SBR is measured by the above-described measuring method.

A weight-average molecular weight (Mw) of the SBR is preferably 200,000 or more, more preferably 250,000 or more, further preferably 300,000 or more, from the viewpoint of wet grip performance. Moreover, the weight-average molecular weight is preferably 2,000,000 or less, more preferably 1,800,000 or less, further preferably 1,500,000 or less, from the viewpoint of cross-linking uniformity. Besides, the Mw of the SBR is measured by the above-described measuring method.

A content of the SBR in the rubber component can be appropriately selected such that the total styrene amount in the rubber component satisfies a range described below, and the content of the SBR in the rubber component is preferably 1% by mass or more, more preferably 3% by mass or more, further preferably 5% by mass or more, further preferably 10% by mass or more, particularly preferably 15% by mass or more, most preferably 20% by mass or more. On the other hand, the content of the SBR in the rubber component is preferably 60% by mass or less, more preferably 50% by mass or less, further preferably 40% by mass or less, particularly preferably 35% by mass or less.

### (Isoprene-based rubber)

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably 20% by mass or more, more preferably 30% by mass or more, further preferably 40% by mass or more, particularly preferably 45% by mass or more. On the other hand, the content of the isoprene-based rubber in the rubber component is preferably 90% by mass or less, more preferably 80% by mass or less, further preferably 70% by mass or less, particularly preferably 65% by mass or less.

### (BR)

The BR is not particularly limited, and those common in the tire industry can be used, such as, for example, a BR having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

A content of the BR in the rubber component is preferably 5% by mass or more, more preferably 7% by mass or more, further preferably 10% by mass or more, further preferably 15% by mass or more, particularly preferably 20% by mass or more. On the other hand, the content of the BR in the rubber component is preferably 50% by mass or less, more preferably 40% by mass or less, further preferably 35% by mass or less, further preferably 30% by mass or less, particularly preferably 25% by mass or less, most preferably 20% by mass or less.

### (Other rubber components)

The rubber component according to the present invention may comprise rubber components other than the above-described isoprene-based rubber, SBR, and BR. A cross-linkable rubber component commonly used in the tire industry can be used as another rubber component, examples of which include a diene-based rubber other than the isoprene-based rubber, the SBR, and the BR, such as a styrene-isoprene rubber (SIR), a styrene-isoprene-butadiene rubber (SIBR), a chloroprene rubber (CR), and an acrylonitrile-butadiene rubber (NBR); and a rubber component other than the diene-based rubber, such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), and a hydrin rubber. These other rubber components may be used alone, or two or more thereof may be used in combination. The rubber component according to the present invention is preferably a rubber component consisting of a diene-based rubber.

The total styrene amount (S) in the rubber composition of the present invention is preferably 0.2% by mass or more, more preferably 0.3% by mass or more, further preferably 0.4% by mass or more, further preferably 0.6% by mass or more, particularly preferably 1.0% by mass or more, most preferably 1.5% by mass or more, from the viewpoint of the effects of the present invention. Moreover, the total styrene amount (S) is preferably 5.0% by mass or less, more preferably 4.8% by mass or less, further preferably 4.5% by mass or less, particularly preferably 4.0% by mass or less, particularly preferably 3.5% by mass or less, most preferably 3.0% by mass or less.

The ratio (S/70°C tan δ) of the total styrene amount S in the rubber composition of the present invention to the tan δ at 70°C (70°C tan δ) of the rubber composition of the present invention is preferably greater than 9, more preferably greater than 30, further preferably greater than 80, further preferably greater than 100. An upper limit value of S/70°C tan δ is preferably less than 150.

The ratio (S/70°CE∗) of the total styrene amount S in the rubber component of the present invention to the complex elastic modulus (MPa) at 70°C (70°CE∗) of the rubber composition of the present invention is preferably 0.30 or more, more preferably 0.80 or more, further preferably 1.0 or more, particularly preferably 1.10 or more. An upper limit value of S/70°CE∗ is preferably less than 3.0.

### <Filler>

The rubber composition according to the present invention preferably comprises a filler and preferably comprises, as a filler, silica and/or carbon black. Among them, it preferably comprises silica and carbon black. Moreover, the filler may be a filler consisting of carbon black and silica.

### (Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. The silica may be used alone, or two or more thereof may be used in combination.

The average primary particle size of silica is preferably 17 nm or more, more preferably 18 nm or more, further preferably 19 nm or more, particularly preferably 20 nm or more. When the average primary particle size of silica is within the above-described ranges, dispersibility of silica becomes good, and it is considered that fuel efficiency is further improved. On the other hand, the average primary particle size is preferably 30 nm or less, more preferably 25 nm or less, from the viewpoint of obtaining reinforcing property. Besides, the average primary particle size of silica is measured by the above-described measuring method.

The CTAB (cethyltrimethylammonium bromide) specific surface area of silica is preferably 180 m²/g or less, more preferably 170 m²/g or less, further preferably 160 m²/g or less, further preferably 150 m²/g or less, particularly preferably 140 m²/g or less, from the viewpoint of the effects of the present invention. Moreover, the CTAB specific surface area is preferably 100 m²/g or more, more preferably 105 m²/g or more, further preferably 110 m²/g or more, further preferably 115 m²/g or more, particularly preferably 120 m²/g or more. Besides, the CTAB specific surface area of silica is measured by the above-described measuring method.

A nitrogen adsorption specific surface area (N₂SA) of silica is preferably 180 m²/g or less, more preferably 170 m²/g or less, further preferably 160 m²/g or less, further preferably 150 m²/g or less, particularly preferably 140 m²/g or less, from the viewpoint of the effects of the present invention. Moreover, the N₂SA is preferably 100 m²/g or more, more preferably 105 m²/g or more, further preferably 110 m²/g or more, further preferably 115 m²/g or more, particularly preferably 120 m²/g or more. Besides, the N₂SA of silica is measured by the above-described measuring method.

A content of silica based on 100 parts by mass of the rubber component of the rubber composition of the present invention is preferably 10 parts by mass or more, more preferably 20 parts by mass or more, more preferably 25 parts by mass or more, further preferably 30 parts by mass or more, particularly preferably 35 parts by mass or more, from the viewpoint of obtaining reinforcing property. Moreover, it is preferably 70 parts by mass or less, more preferably 60 parts by mass or less, further preferably 65 parts by mass or less, particularly preferably 50 parts by mass or less, from the viewpoint of obtaining flexibility to mitigate stress.

### (Carbon black)

Carbon black is not particularly limited, and those common in the tire industry can be used, such as GPF, FEF, HAF, ISAF, and SAF. These carbon black may be used alone, or two or more thereof may be used in combination.

The average primary particle size of carbon black is preferably 25 nm or more, more preferably 35 nm or more, further preferably 40 nm or more, particularly preferably 50 nm or more. When the average primary particle size of carbon black is within the above-described ranges, dispersibility of carbon black becomes good, and it is considered that fuel efficiency is further improved. On the other hand, the average primary particle size is preferably 90 nm or less, more preferably 75 nm or less, further preferably 60 nm or less, from the viewpoint of obtaining reinforcing property. Besides, the average primary particle size of carbon black is measured by the above-described measuring method.

A nitrogen adsorption specific surface area (N₂SA) of carbon black is preferably 90 m²/g or less, more preferably 80 m²/g or less, further preferably 70 m²/g or less, particularly preferably 60 m²/g or less, from the viewpoint of the effects of the present invention. Moreover, the N₂SA is preferably 10 m²/g or more, more preferably 20 m²/g or more, further preferably 30 m²/g or more. Besides, the N₂SA of carbon black is measured by the above-described measuring method.

A content of carbon black when compounded based on 100 parts by mass of the rubber component is preferably 5 parts by mass or more, more preferably 10 parts by mass or more, further preferably 15 parts by mass or more, particularly preferably 20 parts by mass or more, from the viewpoint of obtaining reinforcing property. Moreover, it is preferably 50 parts by mass or less, more preferably 40 parts by mass or less, further preferably 35 parts by mass or less, particularly preferably 30 parts by mass or less, most preferably 25 parts by mass or less, from the viewpoint of obtaining flexibility to mitigate stress.

### (Other fillers)

As a filler other than silica and carbon black, any filler conventionally and generally used in the tire industry can be compounded, such as aluminum hydroxide, calcium carbonate, alumina, clay, and talc.

A total content of the filler based on 100 parts by mass of the rubber component is preferably 35 parts by mass or more, more preferably 40 parts by mass or more, further preferably 50 parts by mass or more. Moreover, it is preferably 100 parts by mass or less, more preferably 95 parts by mass or less, further preferably 90 parts by mass or less, particularly preferably 80 parts by mass or less, from the viewpoint of the effects of the present invention.

### (Silane coupling agent)

Silica is preferably used in combination with a silane coupling agent. The silane coupling agent is not particularly limited, and any silane coupling agents conventionally used in combination with silica in the tire industry can be used, such as, for example, mercapto-based silane coupling agents such as 3-mercaptopropyltrimethoxysilane, sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among them, the sulfide-based silane coupling agents and/or the mercapto-based silane coupling agent are preferable, and the sulfide-based silane coupling agents are more preferable. These silane coupling agents may be used alone, or two or more thereof may be used in combination.

A content of the silane coupling agent based on 100 parts by mass of the rubber component is preferably 0.5 parts by mass or more, more preferably 1.0 part by mass or more, further preferably 2.0 parts by mass or more, particularly preferably 2.5 parts by mass or more, from the viewpoint of improvement in dispersibility of silica. Moreover, it is preferably 20 parts by mass or less, more preferably 15 parts by mass or less, further preferably 10 parts by mass or less, from the viewpoint of prevention of deterioration of abrasion resistance.

A content of the silane coupling agent based on 100 parts by mass of silica is preferably 1 part by mass or more, more preferably 3 parts by mass or more, further preferably 5 parts by mass or more, particularly preferably 8 parts by mass or more, from the viewpoint of improvement in dispersibility of silica. Moreover, it is preferably 20 parts by mass or less, more preferably 18 parts by mass or less, further preferably 16 parts by mass or less, from the viewpoints of cost and processability.

### <Other compounding agents>

The rubber composition according to the present invention can appropriately comprise compounding agents conventionally and generally used in the tire industry, such as, for example, a plasticizing agent, wax, processing aid, stearic acid, zinc oxide, an antioxidant, a vulcanizing agent, and a vulcanization accelerator, in addition to the above-described components.

### <Plasticizing agent>

The plasticizing agent is a material giving a rubber component plasticity and is a liquid plasticizing agent (a plasticizing agent that is a liquid (liquid state) at room temperature (25°C)) or a solid plasticizing agent (a plasticizing agent that is a solid at room temperature (25°C)). Examples of the plasticizing agent include, for example, oil, a resin component, a liquid polymer, an ester-based plasticizing agent, and the like. Besides, in a case where the rubber component comprises an expanded rubber, a plasticizing agent contained in the extended rubber is also included in the plasticizing agent of the rubber composition.

Examples of oil include, for example, process oils, vegetable oils and fats, and mixtures thereof. As a process oil, for example, a paraffinic process oil such as MES (Mild Extract Solvate), DAE (Distillate Aromatic Extract), TDAE (Treated Distillate Aromatic Extract), TRAE (Treated Residual Aromatic Extract), and RAE (Residual Aromatic Extract), an aromatic process oil, a naphthenic process oil, and the like can be used. Examples of vegetable oils and fats include, a castor oil, a cottonseed oil, a linseed oil, a rapeseed oil, a soybean oil, a palm oil, a coconut oil, a peanut oil, a rosin, a pine oil, a pine tar, a tall oil, a corn oil, a rice bran oil, a safflower oil, a sesame oil, an olive oil, a sunflower oil, a palm kernel oil, a camellia oil, a jojoba oil, a macadamia nut oil, a tung oil, and the like. The oil may be used alone, or two or more thereof may be used in combination. Moreover, from the viewpoint of a life cycle assessment, as the above-described oil, a lubricanting oil after use for a rubber mixing machine, an engine, or the like, or waste cooking oil used in a restaurant or the like may be appropriately used. As an oil, products manufactured by, for example, Idemitsu Kosan Co., Ltd., Sankyo Yuka Kogyo K. K., Japan energy Inc., Olisoy, H&R Group, Hokoku Corporation, Showa Shell Sekiyu K.K., Fuji Kosan Co., Ltd, and the like can be used.

A content of oil when compounded based on 100 parts by mass of the rubber component is preferably 0.5 parts by mass or more, more preferably 1 part by mass or more, further preferably 1.5 parts by mass or more, from the viewpoint of processability. Moreover, it is preferably 50 parts by mass or less, more preferably 40 parts by mass or less, further preferably 30 parts by mass or less, from the viewpoint of abrasion resistance.

Examples of the resin component include, but not particularly limited to, a petroleum resin, a terpene-based resin, a rosin-based resin, a phenol-based resin, and the like, which are commonly used in the tire industry. These resin components may be used alone, or two or more thereof may be used in combination.

A content of the resin component when compounded based on 100 parts by mass of the rubber component is preferably 1 part by mass or more, more preferably 3 parts by mass or more, further preferably 5 parts by mass or more. Moreover, it is preferably 60 parts by mass or less, more preferably 50 parts by mass or less, further preferably 40 parts by mass or less, particularly preferably 30 parts by mass or less, from the viewpoint of suppressing heat generation.

The liquid polymer is not particularly limited as long as it is a polymer that is in a liquid state at room temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid polymer when compounded based on 100 parts by mass of the rubber component is preferably 1 part by mass or more, more preferably 3 parts by mass or more, further preferably 5 parts by mass or more, particularly preferably 7 parts by mass or more. Moreover, the content of the liquid polymer is preferably 50 parts by mass or less, more preferably 40 parts by mass or less, further preferably 20 parts by mass or less.

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of the ester-based plasticizing agent when compounded based on 100 parts by mass of the rubber component is preferably 1 part by mass or more, more preferably 2 parts by mass or more, further preferably 3 parts by mass or more. Moreover, the content of the ester-based plasticizing agent is preferably 50 parts by mass or less, more preferably 40 parts by mass or less, further preferably 30 parts by mass or less, particularly preferably 20 parts by mass or less.

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of prevention of whitening of a tire due to bloom.

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination.

A content of processing aid when compounded based on 100 parts by mass of the rubber component is preferably 0.5 parts by mass or more, more preferably 1.0 part by mass or more, further preferably 1.5 parts by mass or more, from the viewpoint of exhibiting an effect of improving processability. Moreover, it is preferably 10 parts by mass or less, more preferably 8.0 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, and antioxidants such as a carbamic acid metal salt, and a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine; and a quinoline-based antioxidant such as 2,2,4-trimethyl-1 ,2-dihydroquinoline polymer and 6-ethoxy-2,2,4-trimethyl-1,2-dihydroquinoline are preferable. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.5 parts by mass or less, particularly preferably 3.0 parts by mass or less, from the viewpoint of prevention of deterioration. Besides, a content of the vulcanizing-agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyl dithio)hexan, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, etc. These vulcanization accelerators may be used alone, or two or more thereof may be used in combination. Among them, from the viewpoint that a desired effect can be more appropriately obtained, one or more vulcanization accelerators selected from a group consisting of sulfenamide-based, guanidine-based, and thiazole-based vulcanization accelerators are preferable, and the sulfenamide-based vulcanization accelerator is more preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-tert-butyl-2-benzothiazolyl sulfenamide (TBBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably 1.0 part by mass or more, more preferably 1.5 parts by mass or more, further preferably 2.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, particularly preferably 5.0 parts by mass or less. When the content of the vulcanization accelerator is within the above-described ranges, breaking strength and elongation tend to be secured.

### <Production>

The rubber composition constituting the base rubber layer and the cap rubber layer according to the present invention can be produced by a known method. For example, it can be produced by kneading the above-described components with a rubber kneading machine such as an open roll and a sealed type kneader (a Banbury mixer, a kneader, and the like).

A kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of a kneading condition include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of a vulcanization condition include, but not particularly limited to, for example, a method of vulcanizing at 150 to 200°C for 10 to 30 minutes.

The tire of the present invention comprising a base tread composed of the above-described rubber composition can be produced by a usual method. That is, the tire can be produced by extruding an unvulcanized rubber composition, in which the above-described components are compounded for the rubber component as appropriate, into shapes of a base rubber layer and a cap rubber layer, attaching them together with other tire members on a tire forming machine, and molding them by a usual method to form an unvulcanized tire, followed by heating and pressurizing this unvulcanized tire in a vulcanizing machine. Examples of a vulcanization condition include, but not particularly limited to, for example, a method of vulcanizing at 150 to 200°C for 10 to 30 minutes.

### <Application>

The tire of the present invention can be appropriately used as a tire for a passenger car, a tire for a truck/bus, a tire for a two-wheeled vehicle, or a racing tire, and among them, the tire is preferably used as a tire for a passenger car. Besides, the tire for a passenger car refers to a tire that is presupposed to be mounted to a vehicle running with four wheels and that has a maximum load capacity of 1000 kg or less. Moreover, the tire of the present invention can be used as an all-season tire, a summer tire, or a winter tire such as a studless tire.

### EXAMPLES

Hereinafter, the present invention will be described based on Examples, though the present invention is not limited to only these Examples.

Assuming tires comprising treads composed of rubber compositions obtained using various chemicals described below in accordance with Tables 1 and 2, results calculated based on evaluation methods described below are shown in Tables 1 to 3.

Various chemicals used in Examples and Comparative examples are collectively shown below.
NR: TSR 20
BR: Ubepol BR (Registered Trademark) 150B manufactured by Ube Industries, Ltd. (cis content: 97 mol%, Mw: 440,000, a non-oil-extended product)
SBR 1: HPR840 manufactured by JSR Corporation (styrene content: 10% by mass, vinyl content: 42 mol%, Mw: 190,000, a non-oil-extended product)
SBR 2: SBR1502 manufactured by JSR Corporation (styrene content: 23.5% by mass, vinyl content: 18 mol%, Mw: 500,000, a non-oil-extended product)
SBR 3: DYNARON 2324P manufactured by JSR Corporation (hydrogenated SBR, styrene content: 13% by mass)
Carbon black 1: SHOW BLACK N330 manufactured by Cabot Japan K.K. (N₂SA: 75 m²/g, average primary particle size: 30 nm)
Carbon black 2: Seast SO manufactured by Tokai Carbon Co., Ltd., (FEF, N550, N₂SA: 42 m²/g, average primary particle size: 43 nm)
Silica 1: Ultrasil VN3 manufactured by Evonik Degussa GmbH (N₂SA: 175 m²/g, CTAB adsorption specific surface area: 165 m²/g, average primary particle size: 18 nm)
Silica 2: ZEOSIL 115GR manufactured by Rhodia Japan K. K. (N₂SA: 115 m²/g, CTAB adsorption specific surface area: 115 m²/g, average primary particle size: 20 nm)
Silane coupling agent: Si266 manufactured by Evonik Degussa GmbH (bis(3-triethoxysilylpropyl)disulfide)
Oil: VivaTec 400 manufactured by H&R Group (TDAE oil)
Wax: OZOACE 0355 manufactured by Nippon Seiro Co., Ltd.
Resin component: Sylvares SA85 manufactured by Kraton Corporation (copolymer obtained by copolymerizing α-methylstyrene and styrene, softening point: 85°C)
Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: Nocrac RD manufactured by Ouchi Shinko Chemical Industry Co., Ltd. (poly(2,2,4-trimethyl-1,2-dihydroquinoline))
Stearic acid: Bead stearic acid "CAMELLIA" manufactured by NOF CORPORATION
Zinc oxide: Zinc oxide No. 1 manufactured by Mitsui Mining & Smelting Co., Ltd.
Sulfur: SEIMI OT manufactured by Nippon Kanryu Industry Co., Ltd. (10% oil-containing insoluble sulfur)
Vulcanization accelerator 1: Nocceler NS manufactured by Ouchi Shinko Chemical Industry Co., Ltd. (N-t-butyl-2-benzothiazolesulfenamide)
Vulcanization accelerator 2: Nocceler CZ manufactured by Ouchi Shinko Chemical Industry Co., Ltd. (N-cyclohexyl-2-benzothiazolylsulfenamide (CBS))
Vulcanization accelerator 3: Nocceler D manufactured by Ouchi Shinko Chemical Industry Co., Ltd. (1,3-diphenylguanidine (DPG))

### (Example and Comparative example)

According to the compounding formulations shown in Tables 1 and 2, using a 1.7 L closed Banbury mixer, all chemicals other than sulfur and a vulcanization accelerator are kneaded for 5 minutes until a temperature reaches a discharge temperature at 170°C, to obtain a kneaded product. Next, using a twin-screw open roll, the sulfur and vulcanization accelerator are added to the obtained kneaded product, and the mixture is kneaded for 4 minutes until the temperature reaches 105°C, to obtain an unvulcanized rubber composition. The obtained unvulcanized rubber composition is extruded into shapes of a base rubber layer and a cap rubber layer (7.5 mm) using an extruder equipped with a mouthpiece having a predetermined shape and is attached together with other tire members to produce an unvulcanized tire. The unvulcanized tire is press-vulcanized at 170°C for 12 minutes to produce each test tire (size: 205/65R15).

The following evaluations of the obtained test tires are performed. The evaluation results are shown in Table 3.

### < Measurement of 70°C tan δ and 70°CE∗>

Each rubber specimen subjected to vulcanization is prepared by cutting out the rubber specimen having a length of 20 mm, a width of 4 mm, and a thickness of 1 mm from a base tread part of each test tire such that a tire circumferential direction becomes a long side and a tire width direction becomes a thickness direction. For each rubber specimen, a tan δ and a complex elastic module (E∗) are measured using EPLEXOR series manufactured by gabo Systemtechnik GmbH under a condition of a temperature at 70°C, a frequency of 10 Hz, and a dynamic strain amplitude of 1 %. The results are shown in Table 1.

### <Ride comfort>

Each test tire is filled with air at 250 kPa and mounded on an automobile with a displacement of 2000 cc. This automobile is run at 100 km/h on a test course with an asphalt road surface, and test drivers perform sensory evaluations of ride comfort. The evaluations are performed using scores that are integer values of 1 to 5, and based on evaluation criteria that the higher the score is, the more excellent the ride comfort is, a total score by 20 test drivers is calculated. A total score of Comparative example 4 is converted into a reference value (100), and an evaluation result for each test tire is indicated as an index in proportion to the total score.

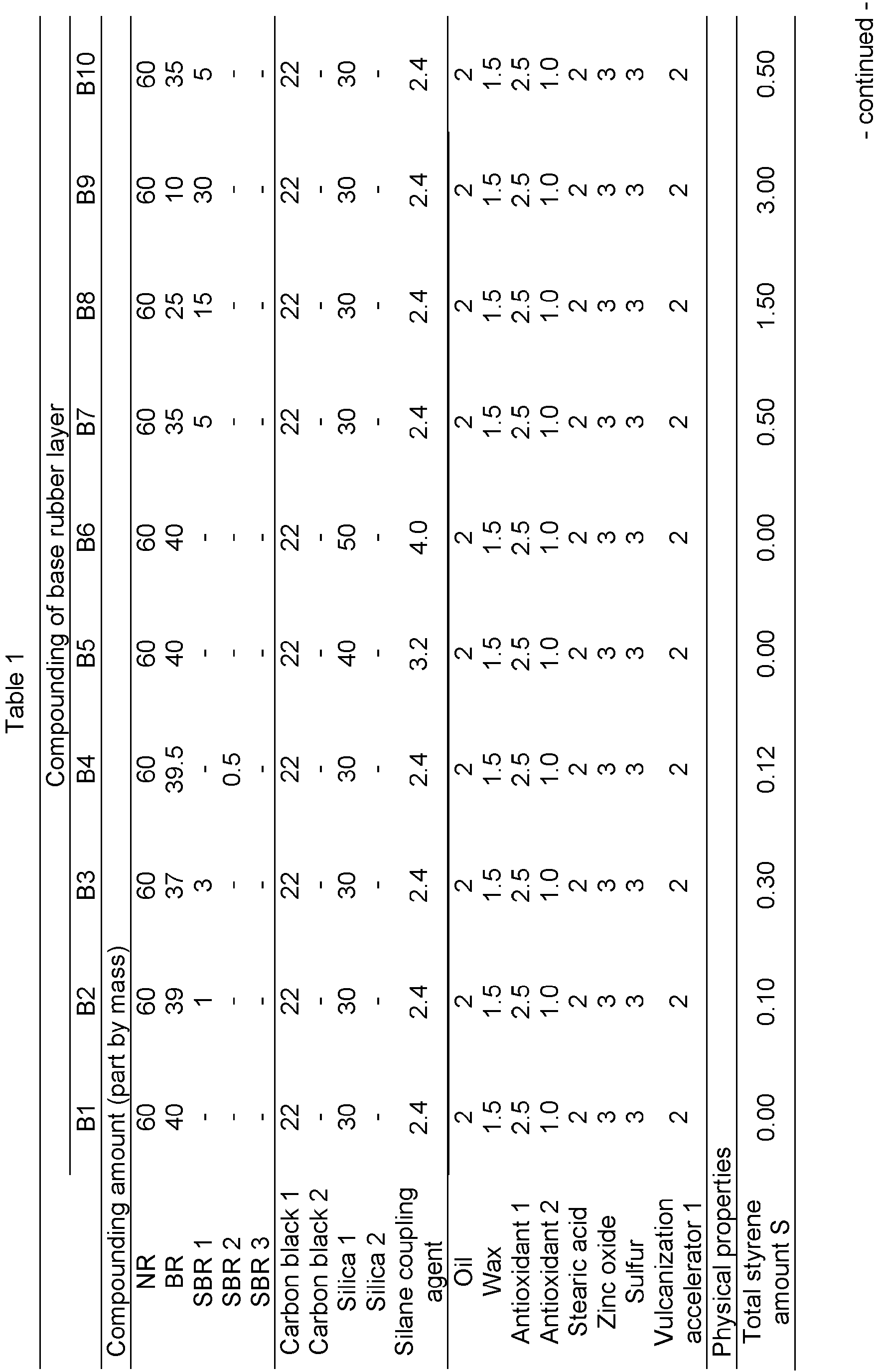

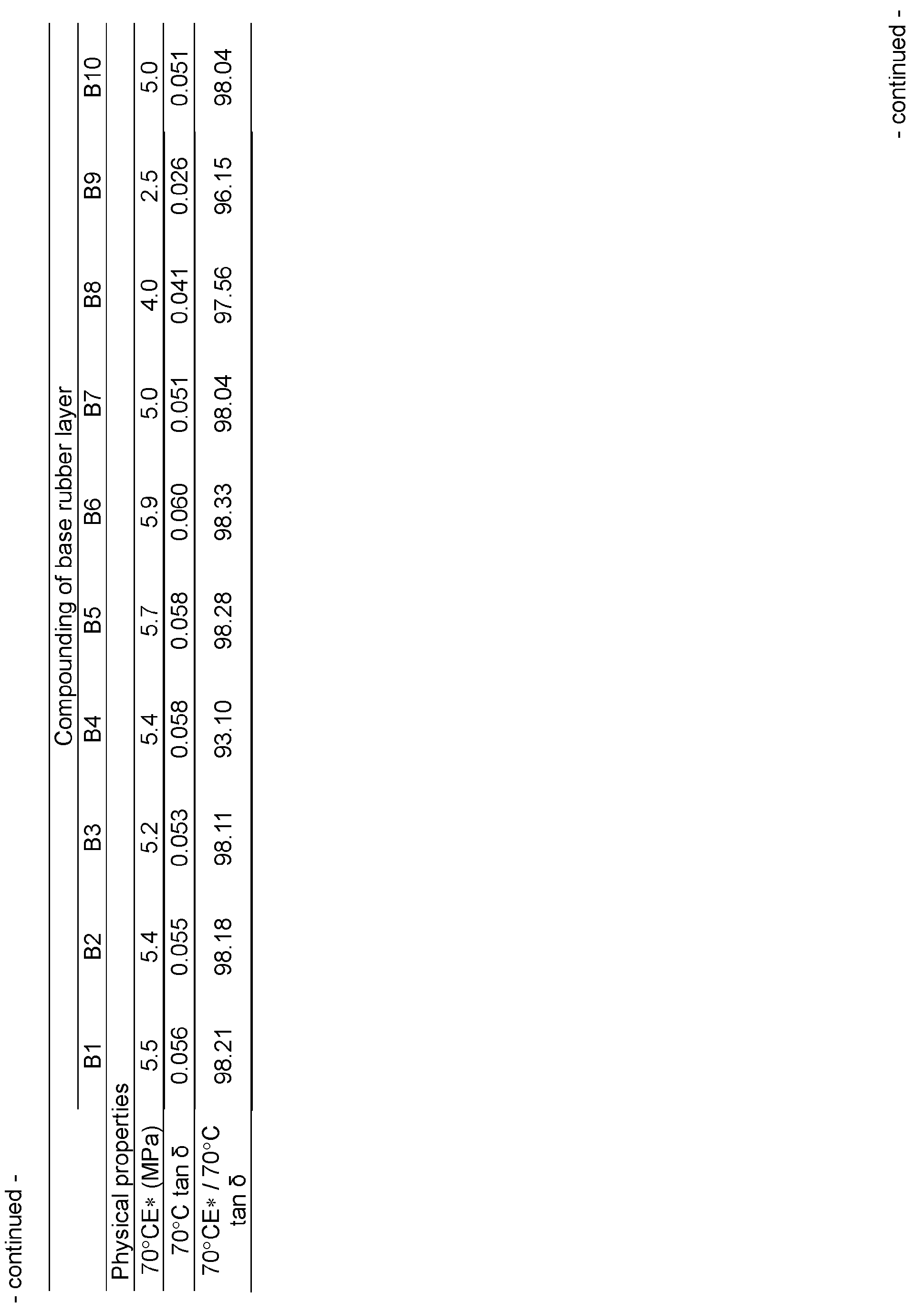

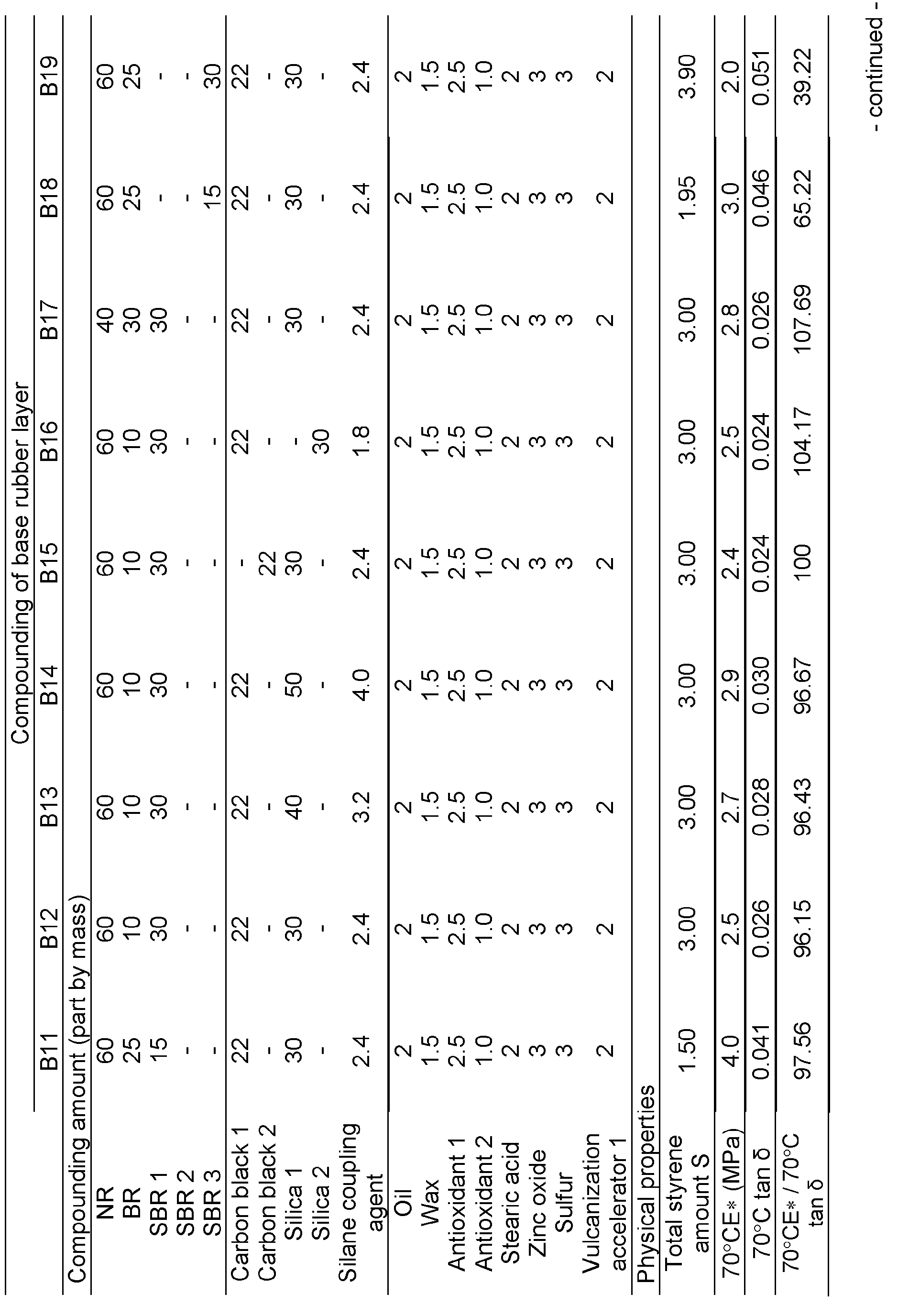

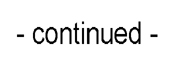

**Table 2**

| Compounding of cap rubber layer | C |
|---|---|
| Compounding amount (part by mass) | |
| NR | 70 |
| SBR1 | 20 |
| BR | 10 |
| Carbon black | 15 |
| Silica | 45 |
| Silane coupling agent | 4.5 |
| Oil | 10 |
| Antioxidant 1 | 2.0 |
| Antioxidant 2 | 1.0 |
| Resin component | 3.0 |
| Zinc oxide | 3.0 |
| Stearic acid | 3.0 |
| Sulfur | 1.5 |
| Vulcanization accelerator 2 | 2.0 |
| Vulcanization accelerator 3 | 1.0 |
| 70°CE∗ (MPa) | 6.0 |

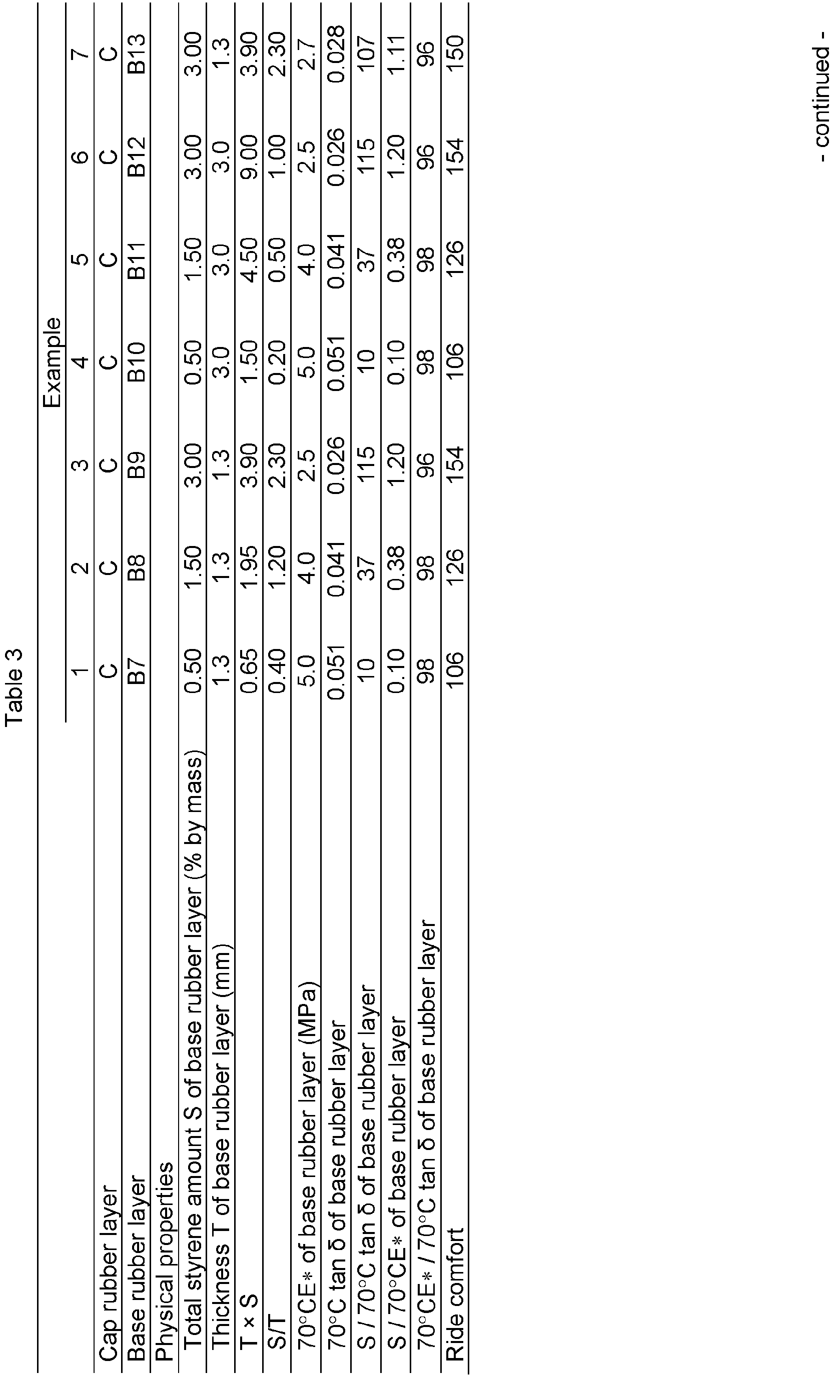

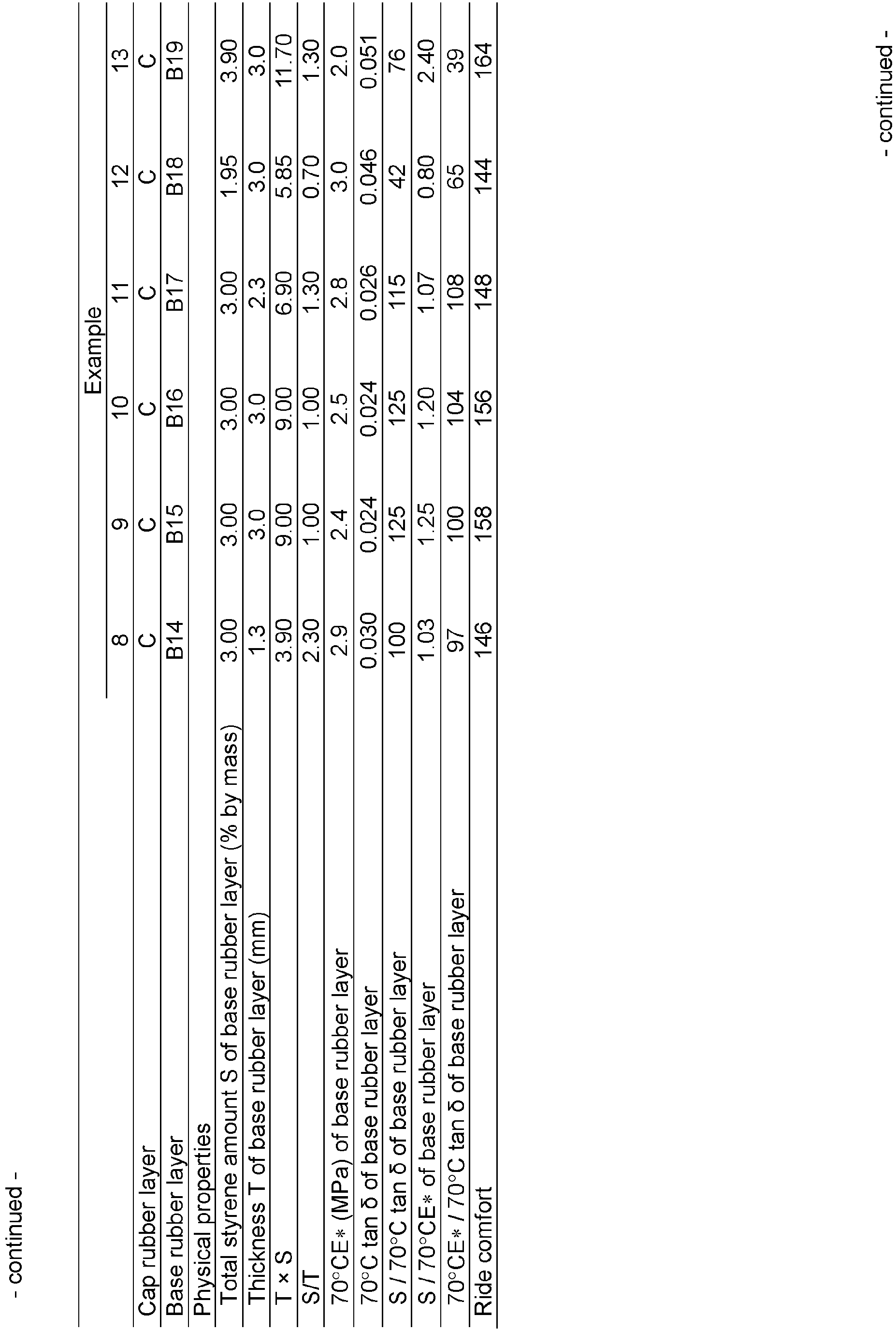

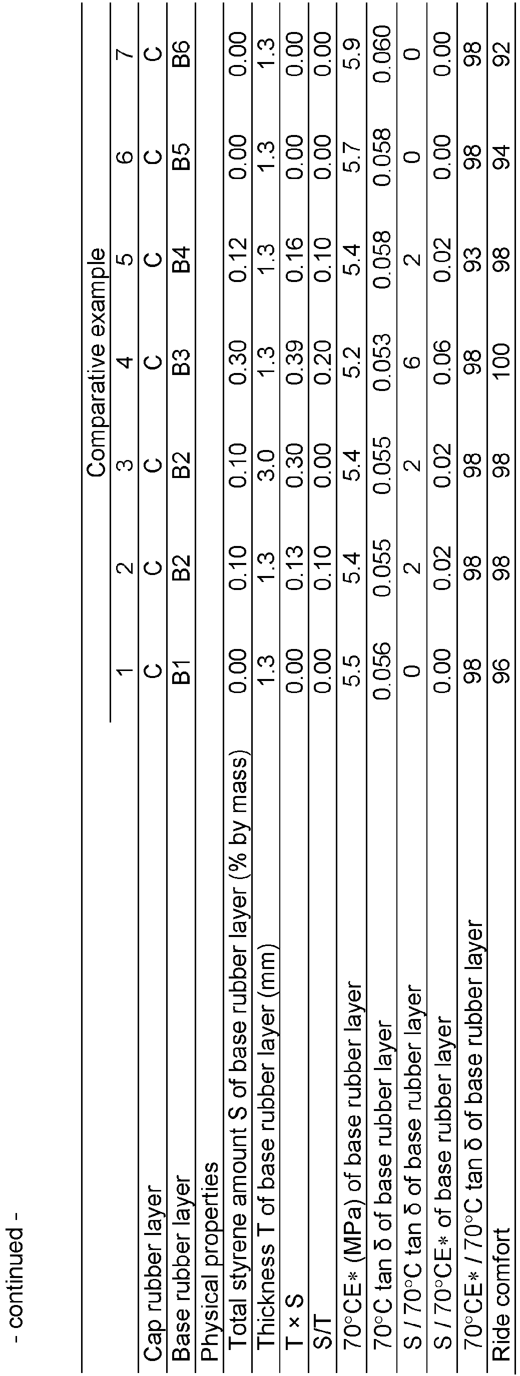

### <Embodiments>

Embodiments of the present invention are described below.
[1] A tire comprising a tread having a base rubber layer,
   wherein the base rubber layer is composed of a rubber composition comprising a rubber component,
   wherein, when a thickness of the base rubber layer is defined as T (mm) and a total styrene amount in the rubber component is defined as S (% by mass), a product (T × S) of T and S is greater than 0.50.
[2] The tire of [1] above, wherein the product (T × S) of T and S is greater than 3.0.
[3] The tire of [1] or [2] above, wherein the rubber composition comprises silica whose average primary particle size is 17 nm or more, more preferably 18 nm or more.
[4] The tire of any one of [1] to [3] above, wherein the rubber composition comprises carbon black whose average primary particle size is 40 nm or more.
[5] The tire of any one of [1] to [4] above, wherein the rubber component comprises 30% by mass or more and 90% by mass or less, more preferably 40% by mass or more and 70% by mass or less, more preferably 50% by mass or more and 65% by mass or less of an isoprene-based rubber.
[6] The tire of any one of [1] to [5] above, wherein a ratio (70°CE∗/70°C tan δ) of a complex elastic modulus (MPa) at 70°C (70°CE∗) of the rubber composition to a tan δ at 70°C (70°C tan δ) of the rubber composition is 100 or less.
[7] The tire of any one of [1] to [6] above, wherein a ratio (S/70°C tan δ) of S to the tan δ at 70°C (70°C tan δ) of the rubber composition is greater than 80, more preferably greater than 90.
[8] The tire of any one of [1] to [7] above, wherein a ratio (S/70°CE∗) of S to the complex elastic modulus (MPa) at 70°C (70°CE∗) of the rubber composition is 1.0 or more.
[9] The tire of any one of [1] to [8] above, wherein T is 1.3 mm or more and 3.0 mm or less.
[10] The tire of any one of [1] to [9] above, wherein S is 0.4% by mass or more and 2.4% by mass or less.

### REFERENCE SIGNS LIST

- 1: Tread part
- 2: Cap rubber layer
- 4: Base rubber layer
- 7: Inner liner
- 8: Belt layer
- 9: Carcass
- 11: Band
- T: Thickness of base rubber layer
- CL: Tire equatorial plane

It is an object of the present invention to provide a tire having improved ride comfort during high-speed running. Provided is a tire comprising a tread having a base rubber layer, wherein the base rubber layer is composed of a rubber composition comprising a rubber component, wherein a product (T × S) of a thickness T (mm) of the base rubber layer and a total styrene amount S (% by mass) in the rubber component is greater than 0.50.

## Claims

1. A tire comprising a tread having a base rubber layer,
wherein the base rubber layer is composed of a rubber composition comprising a rubber component,
wherein, when a thickness of the base rubber layer is defined as T (mm) and a total styrene amount in the rubber component is defined as S (% by mass), a product (T × S) of T and S is greater than 0.50.

2. The tire of claim 1, wherein the product (T × S) of T and S is greater than 3.0.

3. The tire of claim 1 or 2, wherein the rubber composition comprises silica whose average primary particle size is 17 nm or more.

4. The tire of any one of claims 1 to 3, wherein the rubber composition comprises carbon black whose average primary particle size is 40 nm or more.

5. The tire of any one of claims 1 to 4, wherein the rubber component comprises 30% by mass or more and 90% by mass or less of an isoprene-based rubber.

6. The tire of any one of claims 1 to 5, wherein a ratio (70°CE∗/70°C tan δ) of a complex elastic modulus (MPa) at 70°C (70°CE∗) of the rubber composition to a tan δ at 70°C (70°C tan δ) of the rubber composition is 100 or less.

7. The tire of any one of claims 1 to 6, wherein a ratio (S/70°C tan δ) of S to the tan δ at 70°C (70°C tan δ) of the rubber composition is greater than 80.

8. The tire of any one of claims 1 to 7, wherein a ratio (S/70°CE∗) of S to the complex elastic modulus (MPa) at 70°C (70°CE∗) of the rubber composition is 1.0 or more

9. The tire of any one of claims 1 to 8, wherein T is 1.3 mm or more and 3.0 mm or less.

10. The tire of any one of claims 1 to 9, wherein S is 0.4% by mass or more and 2.4% by mass or less.
